# EUROPEAN PATENT SPECIFICATION

(11) **EP 2 181 011 B1**
(45) Date of publication and mention of the grant of the patent: **15.02.2012**
(21) Application number: 08718607.8
(22) Date of filing: 05.03.2008
(51) Int. Cl.: B60K 17/35, B60K 23/08, B60W 30/18

(54) **VEHICLE TRANSMISSION WITH A DRIVE DISCONNECT SYSTEM AND DEVICE**
FAHRZEUGGETRIEBE MIT ANTRIEBSUNTERBRECHUNGSSYSTEM UND -VORRICHTUNG
TRANSMISSION DE VÉHICULE À SYSTÈME DE DÉSACCOUPLAGE D'ENTRAÎNEMENT ET DISPOSITIF

(30) Priority: 26.07.2007 GB 0714572; 08.02.2008 GB 0802266
(43) Date of publication of application: 05.05.2010
(73) Proprietor: Xtrac Limited, Kennet Park Thatcham, Berkshire RG19 4ZA (GB)
(72) Inventor: CHOLMELEY, Christopher, Guy, Berkshire RG18 4EL (GB); DICKINSON, Mel, Richard, Hampshire RG26 5UA (GB); GARDNER, Christopher, James, Berkshire RG6 4AE (GB); MCCARDLE, James, Berkshire RG20 8SW (GB); MOORE, Adrian, Paul, Berkshire RG18 9PS (GB)
(74) Representative: Raynor, Simon Mark
(86) International application number: PCT/GB2008/000746
(87) International publication number: WO 2009/013446

(56) References cited:
- DE-A1- 3 127 605
- JP-A- 1 111 535
- JP-A- 11 278 088
- JP-A- 63 034 240
- JP-A- 63 125 436
- JP-A- 2002 187 447

## Description

This invention relates to a vehicle transmission with a drive disconnect system and device. Specifically, it relates to a system for disconnecting the drive to a set of wheels of a vehicle, and in particular, but not exclusively, to the rear drive wheels of a four-wheel drive vehicle. Embodiments of the invention have applications in high-performance motor vehicles such as competition rally cars.

Typically a four-wheel drive vehicle transmission includes three differentials: one for the front axle, one for the rear axle and a centre differential for connection between the front and rear axles. In a high-performance motor vehicle it may be desirable for reasons of influencing the dynamic response of the vehicle, that one or more of these differentials be of the limited-slip type. In some instances, the centre differential may be pre-loaded by, for example, a spring system, which means that in use the differential could never be considered `open'; that is, there will always be some degree of locking.

In certain dynamic situations, this effect of locking in the centre differential may not be desirable - for example, when the handbrake is being applied to lock the rear brakes and so effect a 'handbrake turn'. During such a manoeuvre, the rear wheels are locked using the handbrake to allow them to slide in a direction transverse the direction of the vehicle's motion, thereby allowing rapid yaw movement. At the same time, the engine continues to drive the front wheels, to pull the vehicle forward into and around a bend. The difference in rotational speed between the front and the rear wheels is accommodated by slip within the centre differential. However, this gives rise to several problems. With any differential, stopping one output while maintaining the speed of the other output will cause the input speed to drop. In practice, this means that the engine speed drops during a handbrake turn, which can cause an unwelcome drop in engine torque. This problem is worse in the case of a limited slip differential, as a result of the frictional drag that the limitation in slip imposes. It can also cause rapid wear to occur within the centre differential.

JP63125436A describes a method for controlling a four-wheel drive device of a vehicle, in which excessive torque is prevented from acting on a centre differential by removing a differential restriction from the centre differential when a parking brake is applied while the vehicle is travelling. When the parking brake is applied, the differential control clutch is released allowing free rotation of the front wheel driving shaft.

An aim of the invention is to provide a transmission system for a vehicle, and in particular for an all-wheel-drive competition vehicle, that can enable a driver to perform an effective handbrake turn. The present applicants have realised that this aim might be achieved by ensuring that full drive is maintained to the front wheels while completely removing all drive from the rear wheels while a handbrake turn manoeuvre is being performed.

To this end the invention provides in one aspect a transmission system for a vehicle that has a first set and a second set of driven wheels and a brake that is operable to brake the first set of wheels, the transmission system comprising a differential having a drive input, a first output for driving the first set of wheels and a second output for driving the second set of wheels, the differential being operative to transmit drive from the drive input to the sets of driven wheels and being lockable to prevent differential rotation of the first and second outputs, a disconnect unit between the first output of the differential and the first set of wheels operable to disconnect drive to the first set of wheels, and a common operating control that is operable to operate a first actuator of the disconnect unit, a second actuator of the brake, and a third actuator of the differential, in which the transmission system is operative, on application of the brake to the first set of wheels, to disconnect drive to the first set of wheels, while maintaining drive to the second set of wheels,

Such a transmission system causes drive automatically to be removed from the braked wheels when the brake is applied, so enabling a driver to lock the braked wheels while maintaining drive to the other wheels of the vehicle. This allows the driver to perform a handbrake turn.

The system includes a differential having a drive input, a first output for driving the first set of wheels and a second output for driving the second set of wheels. The differential is lockable to prevent differential rotation of the first and second outputs. This reduces frictional losses and wear within the centre differential. It also avoids a change in input speed and so does not affect engine torque.

The invention includes an operating control that is operable to lock the differential and disconnect drive from the first set of wheels while applying a brake to the first set of wheels. The entire system can therefore be controlled by operating a single control, for example the handbrake.

Most typically, the first (braked) set of wheels includes the rear wheels of a vehicle. In such embodiments, the set of wheels to which drive is maintained are typically the front wheels of the vehicle.

The invention includes a disconnect unit between the first output of the differential and the first set of wheels, which is operable to disconnect drive to the first set of wheels.

The disconnect unit can be operated to disconnect drive and the brakes can be applied by a common operational control such as a handbrake lever. The common operational control is operational to apply hydraulic pressure to a hydraulic control system to operate a first hydraulic actuator of the disconnect unit, and to a second hydraulic actuator of the brake. The common operational control is also operational to apply hydraulic pressure a third hydraulic actuator to lock the centre differential.

In a typical embodiment, a transmission system comprises a gearbox having an output connected to a centre differential; a rear differential having an input connected through the disconnect unit to a first output of the centre differential; and a front differential having an input connected to a second output of the centre differential. The disconnect unit may be located between the first output of the centre differential and the input of the rear differential. As an alternative two disconnect units may be applied to the outputs of the rear differential, which operate to disconnect the rear drive at the output of the rear differential rather than the input. This could be advantageous if for example low friction is required, as in this instance the entire rear differential is dis-connected from the vehicle road wheels.

In these embodiments, on operation of the disconnect unit the second output of the centre differential may be constrained to rotate with the first output. This prevents differential output and ensures that all of the drive torque is diverted to the unbraked wheels. Most advantageously, the disconnect unit and the centre differential are locked by operation of a common control system. The common control system typically operates to brake wheels that are driven by the rear differential.

In preferred embodiments, the disconnect unit includes a friction plate drive clutch having a drive input and a drive output. The friction plate drive clutch may include multiple friction plates. The friction plate drive clutch may include a cam mechanism that operates selectively to apply a clamping force to the friction plate drive clutch to allow it to transmit drive from its input to its output, and to remove the clamping force from the friction plate drive clutch to allow its input and its output to rotate independently. Advantageously, the cam mechanism is actuated by a secondary friction plate clutch within the disconnect unit. Since the secondary friction plate clutch does not transmit a large torque, it may have only a light clamping force, for example a spring, whereby it can be operated by a compact, simple and lightweight control system. Typically, upon release of the secondary friction plate clutch the cam mechanism operates to remove the clamping force from the drive clutch. This can be achieved by using a simple control system (for example a hydraulic piston) to release the load applied by the spring.

From a second aspect, the invention provides a vehicle comprising a prime mover, a multi-speed gearbox and a transmission system embodying the first aspect of the invention.

According to another aspect of the present invention there is provided a system for disconnecting drive to at least some of the vehicle wheels and for simultaneously (or near simultaneously) locking a differential that connects the front and rear drives, when the drive is disconnected.

Typically, the system is arranged to disconnect the rear drive. Alternatively, it could be used to disconnect the front drive.

Advantageously the system can be actuated using a manually operated input device such as the vehicle handbrake lever. For example, it may be operated by a hydraulic cylinder actuated by the handbrake lever.

According to another aspect of the invention there is provided a disconnection device for disconnecting drive to the rear wheels.

According to another aspect of the invention there is provided a differential locking device that can be selectively locked by operation of an actuation system.

According to another aspect of the invention there is provided a transmission system for a vehicle that has a set of driven wheels, a differential unit having a drive input and a pair of drive outputs, each drive output being connected to a driven wheel, and a disconnect unit in the connection between each drive output and the respective driven wheel, said disconnect units being operable to disconnect drive to the driven wheels.

An embodiment of the invention will now be described in detail, by way of example, and with reference to the accompanying drawings, in which:
Figure 1 is a block diagram of a power system of a vehicle that incorporates a transmission system embodying the invention;
Figure 2 is a section through a disconnect unit and rear differential being components of an embodiment of the invention;
Figure 3 is a section through the disconnect unit of Figure 2;
Figure 4 is a detailed view of a release mechanism of the disconnect unit of Figure 2;
Figure 5 is a sectional view of a centre differential being a component of the embodiment of Figure 1;
Figures 6a, 6b and 6c are detailed views of a locking assembly of the centre differential of Figure 5;
Figure 7 is a perspective view of a cam plate that forms part of the disconnect unit, and
Figure 8 is a schematic diagram of a hydraulic control system.

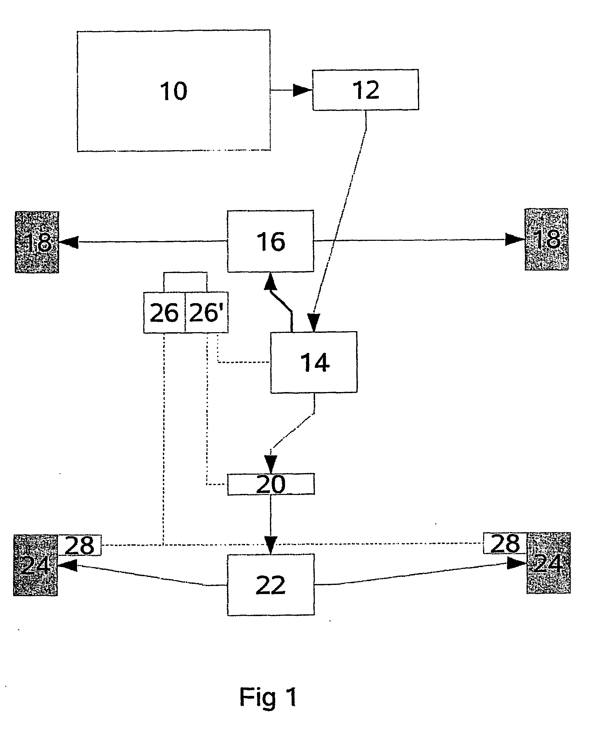

The embodiment that will be described is a transmission unit for a four-wheel drive vehicle that is suitable for on-road or off-road use. It is particularly applicable to a four-wheel drive competition vehicle for use in conditions where performance of a hand-brake turn might give a competitive advantage, such as a rally car. Its main components (seen from below) are shown in Figure 1.

The vehicle includes an internal combustion (IC) engine 10 as its prime mover. Output from the engine passes through a multi-speed gearbox 12 to a lockable centre differential 14, at which the drive is split into two paths. A forward path enters a front differential 16 where it is split once again, to transmit drive to each of a pair of front road wheels 18. A rearward path leaves the centre differential 14, to pass through a disconnect unit 20, to a rear differential 22, where is split again, to transmit drive to each of a pair of rear road wheels 24. When the centre differential 14 is locked, both of its outputs turn at the same speed, whereas its outputs can turn at different speeds when unlocked. Optionally, the centre differential 14 may be of the limited slip type, which allows limited differential output when unlocked.

In this embodiment, the engine 10 is a petrol engine and the multi-speed gearbox is a six-speed, sequential manual gearbox. However, alternative embodiments of the invention might include substantially any type of gearbox, manual or automatic. Embodiments might also include an alternative type of prime mover, such as a compression ignition (CI) or Diesel engine, an electric motor or a hybrid drive system comprising a combination of an IC or CI engine and an electric motor.

With the exception of the presence of the disconnect unit 20 and the ability to lock the centre differential 14, the transmission system described above is essentially conventional. The manner in which these conventional components can be implemented will be familiar to those in the technical field (and will, in any case, vary from one embodiment to another) so they will not be described further.

In addition to the transmission system, and a braking system (not shown) operated by a footbrake that acts on all 4 wheels, the vehicle incorporates a braking system that operates exclusively on the rear wheels. This braking system includes a manually operable brake lever within the vehicle that operates first and second hydraulic master cylinders 26, 26'. The first master cylinder 26 is connected by hydraulic pipes to brake slave cylinders 28 associated with each rear wheel brake. The second master cylinder 26' is connected to the disconnect unit 20 and to the lockable centre differential 14, as will be described.

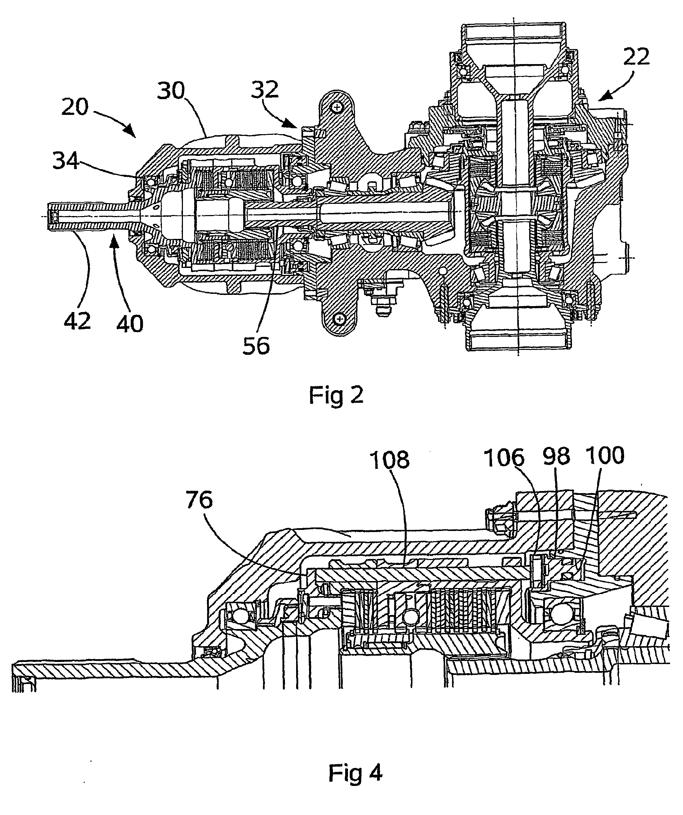

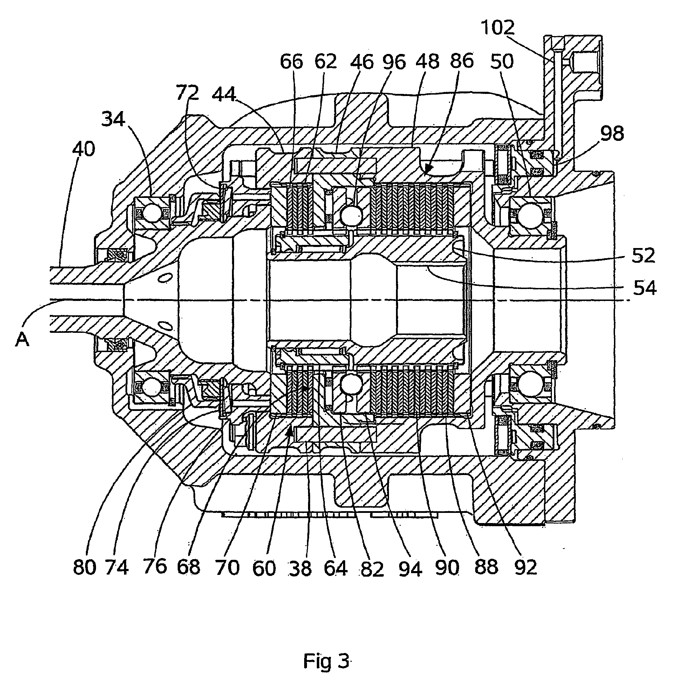

Figure 2 shows a section through the disconnect unit 20 mounted on the rear differential 22. In the arrangement shown in Figure 2, the centre differential is located to the left of the disconnect unit, but is not shown in the figure. Figure 3 shows the disconnect unit separately, in the interest of clarity.

The disconnect unit 20 comprises a housing 30 and closing end plate 32. Drive from the centre differential 14 is received at a splined input shaft 40 of the disconnect unit 20 that is carried in a bearing 34 of the housing 30.

The internal construction and operation of the disconnect 20 unit will now be described.

The disconnect unit 20 comprises an input shaft 40 that has an externally splined tail portion 42 that projects from the housing 30. The tail potion 42 is connected to the centre differential 14 by an intermediate shaft, normally the vehicle propeller shaft (not shown). Internally of the housing 30, the input shaft 40 has an internally-splined flange portion 44. The flange portion 44 is coupled to a spacer 46 and to a clutch housing 48 that has an internally splined central bore. The clutch housing 48 is carried on a bearing 50. The flange portion 44, spacer 46 and clutch housing 48 are coaxial with the input shaft 40 and are coupled together by a plurality of axial pins 38 and stud fasteners (not shown) such that they can rotate as a unit on the bearings 34, 50 about an axis A. The splines of the flange portion 44 and the clutch housing 48 extend parallel to and surround the axis A. An output member 52 of the disconnect unit 20 is disposed within the housing 30. The output member 52 has a bore that is centred on the axis A. The bore of the output member 52 has an internally-splined portion 54. The internally splined portion 54 can receive an externally splined input shaft 56 of the rear differential 14. Therefore, the function of the disconnect unit 20 is to selectively transmit drive from the input shaft 40 to the output member 52, or to allow these components to rotate independently of one another. A sleeve 64 is carried for rotation on the output member 52 radially inward of the flange portion 44 and the spacer 46. The sleeve 64 is externally splined.

Within the flange portion 44 of the input shaft 40 there is a first multi-plate friction clutch assembly 60. The first multi-plate friction clutch assembly 60 comprises a plurality of friction plates 62. Each friction plate 62 carries a plurality of external splines which engage with the splines of the flange portion 44. Therefore, the friction plates 62 are constrained to rotate with the input shaft 40. Friction discs 66 are carried on the splines of the sleeve 64. There is one more friction disc 66 than there are friction plates 62, whereby friction surfaces of each friction plate 62 are sandwiched between adjacent friction discs 66 to form a friction disc pack. The spacer 46 includes an abutment surface 68 that has a first surface against which an inner one of the friction discs 66 abuts. An outer one of the friction discs 66 is abutted by an annular pressure plate 70.

A Belleville spring 72 is carried on the input shaft 40. The Belleville spring 72 is clamped in compression between a washer 74 and a pusher 76. The pusher 76 can slide axially to apply an axial clamping force to the pressure plate 70. The washer 74 is retained by a nut 80 that is carried on an externally threaded part of the input shaft 40. Rotation of the nut 80 with respect to the input shaft 40 causes it to move axially, so increasing or reducing the compression of the Belleville spring 72, and therefore increasing or reducing the clamping force that is applied to the friction plates 62 and friction discs 66 of the clutch assembly.

A first cam plate 82 is carried on the splines of the sleeve 64 such that the first cam plate 82 and the sleeve 64 are constrained to rotate together. The first cam plate 82 is spaced from the abutment surface 68 of the spacer 46, such that axial movement of the cam plate towards the abutment surface 68 is restricted, while relative rotational movement between the first cam plate 82 and the abutment surface 68 is permitted.

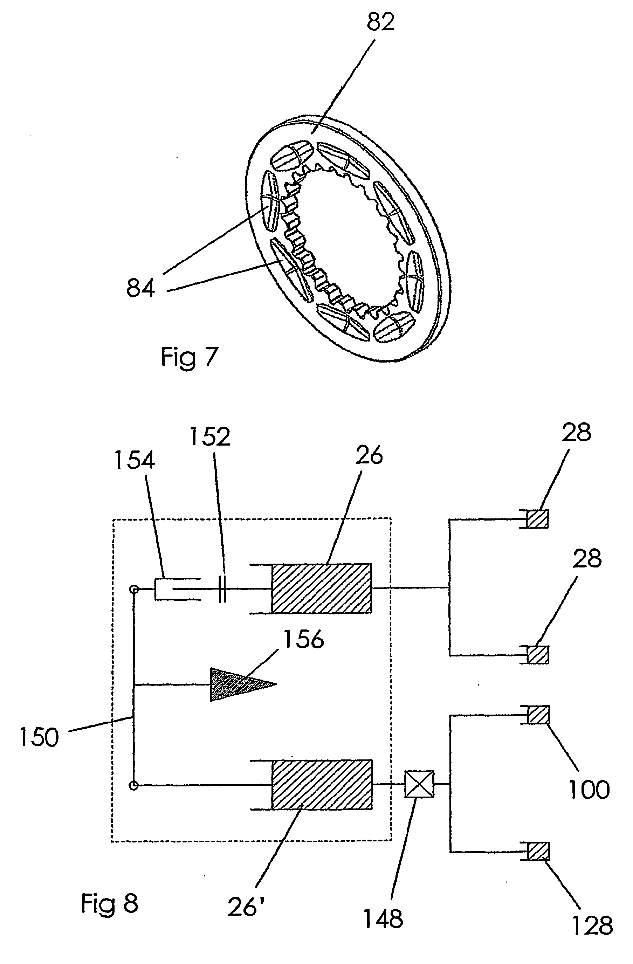

As shown in figure 7, several cam grooves 84 are formed in a surface of the first cam plate 82 that faces away from the abutment surface 68. Each cam groove 84 is arcuate in shape and has a depth that varies uniformly along its length.

A drive clutch assembly 86 is contained within the clutch housing 48. The drive clutch assembly 86 comprises several friction plates 88 carried on the splines of the clutch housing 48 and friction discs 90 carried on external splines of the output member 52, the friction discs 90 and friction plates 88 being arranged alternately in a stack. The outermost friction disc 90 closest to the rear differential 22 is retained against axial movement by an annular pressure plate 92. The outermost friction disc 90 at the opposite axial end of the stack abuts a second cam plate 94 that is similar to the first cam plate 82.

The grooves 84 in the first and second cam plates 82, 94 are disposed to face one another, whereby a channel is formed between each facing pair of grooves. A ball 96, for example of steel or ceramic, is located in each of these channels. The grooves 84 in the cam plates 82, 94 are shaped such that relative rotational movement of the plates in a first direction causes the balls 96 to force the plates 82, 94 axially apart. Since axial movement of the first cam plate 82 is restrained, the effect of this is to move the second cam plate 94 axially in a direction towards the rear differential 22, which has the effect of increasing the axial clamping force between the discs 90 and the plates 92 of the drive clutch assembly 86.

The disconnect unit 20 further comprises a release mechanism, which is shown in Figure 3 and in further detail in Figure 4. The release mechanism includes a piston 98 disposed within a cylinder 100 formed within the housing 30 of the disconnect unit 20. The piston 98 can slide within the cylinder 100 in a direction parallel to the axis A. The cylinder is connected to a duct 102, through which hydraulic fluid can pass into the cylinder 100 behind the piston 98 from the hydraulic system that operates the brakes. The piston 98 acts upon a thrust plate 106. Several push rods 108 extend axially from the thrust plate 106 to the pusher 76.

Upon introduction of hydraulic fluid under pressure through the duct 102 into the cylinder 100, the piston 98, thrust plate 106 and the pusher 76 move in an axial direction away from the rear differential 22 (to the left, in the figures). This compresses the Belleville spring 72 so relieving the clamping force on the first multi-plate friction clutch assembly 60.

Operation of the disconnect unit 20 will now be described.

Drive from the centre differential 14 turns the input shaft 40 of the disconnect unit 20, which drives the friction plates 62 of the first multi-plate friction clutch assembly 60. While the friction disc and friction plate pack is clamped by the Belleville spring 72, drive is transmitted from the friction plates 62 to the friction discs 60, and thence to the sleeve 64 and the first cam plate 82. The input also drives the clutch housing 48, and then, through its splines, to the friction plates 88 of the friction disc/plate pack of the drive clutch assembly 86.

The friction plates 88 of the drive clutch assembly therefore rotate with the input, but the friction discs (inner splines on the output member 52) and the second cam plate 94 rotate with the output. If there is a load on the output (for example due to the connection of the vehicle road wheels to the ground), then there will be a speed differential between the input and the output, and therefore between the first and second cam plates 82, 94. As the cam plates 82, 94 try to rotate at different speeds balls 96 will push the cam plates apart as described above, which will compress the friction disc/plate pack of the drive clutch assembly 86 so causing the drive clutch assembly 86 to lock. This will result in the input and output speeds being the same, provided that the load on the output is within the torque capacity of the drive clutch assembly 86.

When hydraulic pressure is applied to the cylinder 100 by operation of the brake lever and the second master cylinder 26', the piston 98 compresses the Belleville spring 72, so relieving the load on the left hand friction pack of the first friction clutch assembly 60. This allows the sleeve 64 and the first cam plate 82 to rotate freely with the second cam plate 94. Thus, the first and second cam plates 82, 94 are no longer pushed apart by the balls 96. This allows the drive friction disc/plate pack to unlock so that drive to the output member 52 is disconnected. This allows the vehicle rear brakes to be locked during a 'handbrake turn', while the engine still transmits drive to the front wheels.

No pump-generated pressure system is required to operate the transmission system. When the driver operates the handbrake, the second master cylinder 26' supplies sufficient pressure to operate the rear drive disconnect 20 and lock the centre differential 14.

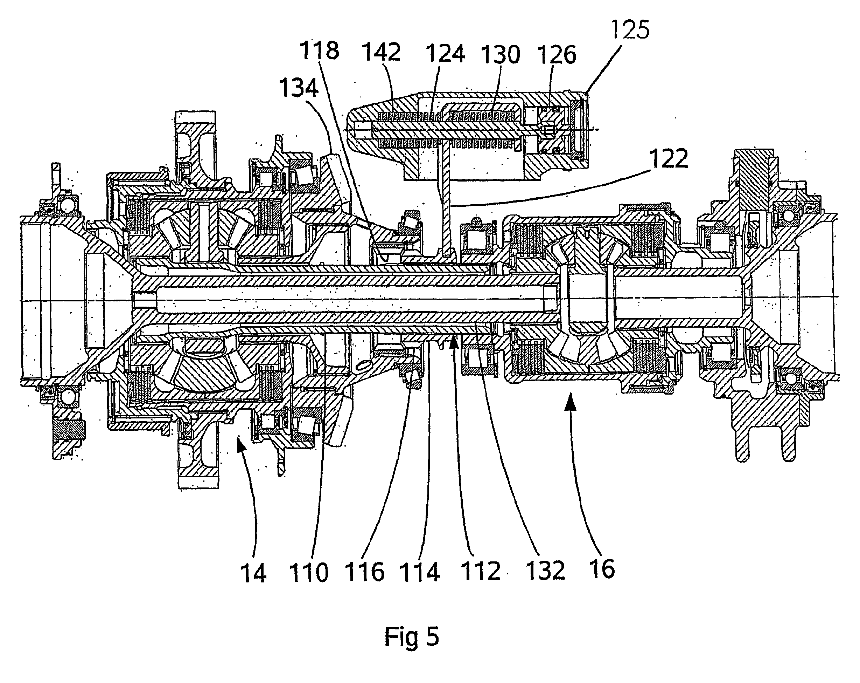

Figure 5 shows a section through a combined centre and front differential unit, which includes a centre differential 14 and a front differential 16. The centre differential 14 has an output bevel gear 134 that provides a first output for the rear differential 22, an output shaft 110 that provides a second output for the front differential 16, and a locking device for locking the centre differential 14, so that the first and second outputs are constrained to rotate at the same speed. The locking device comprises a locking collar 114 that is disposed on the output shaft 110, which is connected to the input of the front differential 16. (Note that this output shaft 110 is hollow: within it is a coaxial output shaft 132 of the front differential 16, which is not directly relevant to the operation of the invention.)

The output shaft 110 has an externally splined region 112. A locking collar 114 is carried on the splined region 112. The collar 114 has an internally splined bore and an externally splined region 116. The collar 114 can slide axially on the shaft 110 but is constrained to rotate with the shaft 110. In an unlocked position, the externally splined region 116 of the collar 114 does not engage with any other component so does not influence rotation of the shaft 110. The collar 114 can slide to a locking position in which its externally splined region 116 engages within an internally splined bore 118 in the output flange 134 of the centre differential 14, thereby coupling rotation of the shaft 110 to rotation of the output flange 134. Thus, when the locking collar 114 is in the locking position, the first and second outputs of the centre differential 14 are locked together.

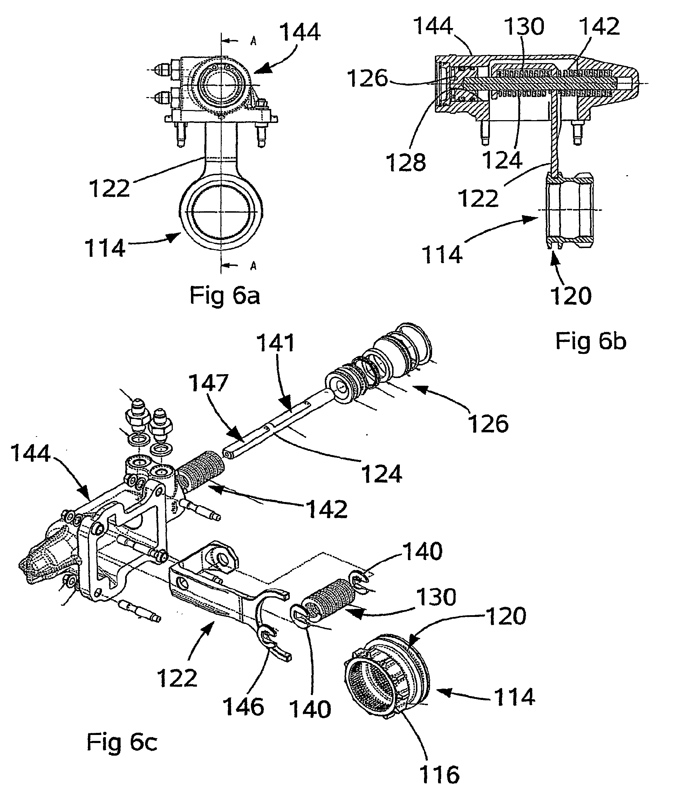

The collar 114 has a circumferential external groove 120. An actuating mechanism for the locking device, shown in Figures 6a to 6c, includes an actuating fork 122 that can engage with the groove 120, such that the collar 114 can rotate with respect to the fork 122, but is constrained to move with the fork 122 in a direction parallel to the bore of the collar 114. Thus, movement of the fork 122 in a direction parallel to the shaft 110 causes the collar 114 to slide axially on the shaft 110.

The fork 122 is carried on a rod 124 that can be driven in a direction parallel to the axis of rotation of the collar 114 by a hydraulic actuator 125, under the action of a piston 126 that is contained within a cylinder 128. The rod 124 is located within an actuator housing 144, within which the cylinder 124 is formed. The fork 122 has a U-shaped section, within which are formed two aligned holes through which the rod 124 passes, the holes being of a size such that the fork 122 can slide on the rod, but such that a minimum of pivotal movement is possible between the fork 122 and the rod 124. Thus, there is a region of the rod 124 that extends from near the centre of the rod to close to the piston 126 between two spaced regions of the U-shaped section of the fork 122. A helical compression drive spring 130 is carried on that region of the rod 124. The drive spring 130 is maintained in compression between two clips 140 that can slide along a first flattened portion 141 of the rod 124. The clips 140 allow the drive spring 130 to be further compressed, but do not allow it to expand. A helical compression return spring 142 is carried on the rod, in compression between the fork 122 and a closed end of a bore within the actuator housing. A clip 146 mounted on a second flattened portion 147 of the rod 124 transmits force from the return spring 142 to the rod 124 and bears against the fork 122.

Under normal operating conditions, there is no pressurised hydraulic fluid fed to the cylinder 128. The rod 124 and the fork 122 are urged by the return spring 142, acting through the clip 146, in a direction towards the cylinder 128, which maintains the collar 114 in its unlocked position. Application of hydraulic fluid under pressure to the cylinder 128 drives the piston 126 and the rod 124 against the force of the return spring 142. This increases the compression of the drive spring 130, which urges the collar 114 in a direction towards the locking position. The presence of the drive spring 130 allows lost motion between the rod 124 and the fork 122. This ensures that the collar 114 only moves when it is correctly aligned with the internal splines in the output flange 134 of the centre differential 14.

The cylinder 128 of the differential lock actuator 125 and the cylinder 100 of the disconnect unit 20 are connected for hydraulic operation to the second master cylinder 26'. The differential lock actuator 125 is therefore operated nearly simultaneously with the disconnect unit 20, so ensuring that the centre differential 14 is locked as drive to the rear wheels is disconnected. A proportioning and limiting valve 148 is preferably provided between the second master cylinder 26' and the two slave cylinders 100,128 to ensure that a maximum pressure value is not exceeded. The bias across the master cylinder 26 and the second master cylinder 26' can be adjusted by means of a bias bar 150 and an adjustable locknut 152 and collar 154 provided in the connection between the bias bar 150 and the first master cylinder 26. The load 156 applied by the handbrake can then be distributed so as to ensure that the differential is disconnected just prior to the rear brakes being applied.

When executing a handbrake turn, the handbrake is applied and the rear wheels are braked simultaneously, the rear output drive is lost and the centre differential is locked. This ensures that all drive is directed to the front wheels and drive to the rear wheels is disconnected during application of the handbrake.

Various modifications of the drive disconnect system are possible, some of which will now be described.

The transmission system may be used in vehicles having more than two sets of wheels, or more than two wheels in each set of wheels. For example, it may be used in a vehicle with two sets of rear wheels, to disconnect one or both sets of rear wheels.

Instead of locating the disconnect unit between the first output of the centre differential and the input of the rear differential, two disconnect units may be provided, located between the outputs of the rear differential and the rear wheels. These disconnect units can then operate to disconnect the rear drive at the output of the rear differential rather than the input. This could be advantageous if for example low friction is required, as in this instance the entire rear differential is disconnected from the vehicle road wheels.

This arrangement, with two disconnect units, may also be used on a two wheel drive vehicle, to disconnect the drive from the driven wheels. This may be useful in a method of measuring aerodynamic drag, in which a vehicle is accelerated to speed, then the driven wheels are disconnected and the time to coast to stationary is measured. In this arrangement, the vehicle generally would not have a centre differential unit, and the activation control for the disconnect units would not be linked to the handbrake lever.

## Claims

1. A transmission system for a vehicle that has a first set and a second set of driven wheels (24,18) and a brake (28) that is operable to brake the first set of wheels (24), the transmission system comprising a differential (14) having a drive input, a first output for driving the first set of wheels (24) and a second output for driving the second set of wheels (18), the differential (14) being operative to transmit drive from the drive input to the sets of driven wheels and being lockable to prevent differential rotation of the first and second outputs, and a common operating control (26,26'); **characterised by** a disconnect unit (20) between the first output of the differential (14) and the first set of wheels (24) that is operable to disconnect drive to the first set of wheels (24), wherein the common operating control (26,26')is operable to operate a first actuator of the disconnect unit (20), a second actuator of the brake (28), and a third actuator of the differential (14), and the transmission system is operative, on application of the brake (28) to the first set of wheels (24), to disconnect drive to the first set of wheels (24), while locking the differential (14) to maintain drive to the second set of wheels (18).

2. A transmission system according to claim 1 in which the disconnect unit (20) includes a friction plate drive clutch (86) having a drive input (40) and a drive output (52).

3. A transmission system according to claim 2 in which the friction plate drive clutch (86) includes multiple friction plates (88).

4. A transmission system according to claim 3 in which the friction plate drive clutch (86) includes a cam mechanism (82,94) that operates selectively to apply a clamping force to the friction plate drive clutch (86) to allow it to transmit drive from its input (40) to its output (52), and to remove the clamping force from the friction plate drive clutch to allow its input and its output to rotate independently.

5. A transmission system according to claim 4 in which the cam mechanism (82) is actuated by a secondary friction plate clutch (60) within the disconnect unit.

6. A transmission system according to claim 5 in which upon release of the secondary friction plate clutch (60) the cam mechanism (82,94) operates to remove the clamping force from the drive clutch (86).

7. A transmission system according to claim 5 or claim 6 in which the amount of torque that can be transmitted by the secondary clutch (60) is adjustable.

8. A transmission system according to any preceding claim in which the common operational control (26,26') is operational to apply hydraulic pressure to a hydraulic control system to operate a first hydraulic actuator of the disconnect unit (20), and to a second hydraulic actuator of the brake (28).

9. A transmission system according to any preceding claim in which the first set of wheels (24) includes the rear wheels of a vehicle.

10. A transmission system according to any preceding claim in which the second set of wheels (18) includes the front wheels of the vehicle.

11. A transmission system according to any preceding claim comprising a gearbox (12) having an output connected to a centre differential (14); a rear differential (22) having an input connected through the disconnect unit (20) to a first output of the centre differential; and a front differential (16) having an input connected to a second output of the centre differential.

12. A transmission system according to claim 11 in which on operation of the disconnect unit (20) the second output of the centre differential (14) is constrained to rotate with the first output.

13. A transmission system according to claim 12 in which the disconnect unit (20) and the centre differential (14) are locked by operation of a common control system (26,26').

14. A transmission system according to claim 13 in which the common control system (26,26') operates to brake wheels that are driven by the rear differential (22).

15. A vehicle comprising a prime mover (10), a multi-speed gearbox (12) and a transmission system according to any preceding claim.

## Patentansprüche

1. Kraftübertragungssystem für ein Fahrzeug, das einen ersten Satz und einen zweiten Satz angetriebener Räder (24, 18) und eine Bremse (28) hat, die zum Bremsen des ersten Rädersatzes (24) betätigt werden kann, wobei das Kraftübertragungssystem ein Differential (14) mit einem Antrieb, einem ersten Abtrieb zum Antreiben des ersten Rädersatzes (24) und einem zweiten Abtrieb zum Antreiben des zweiten Rädersatzes (18), wobei das Differential (14) zum Übertragen der Antriebskraft von dem Antrieb auf die Sätze angetriebener Räder funktionell ist und sperrbar ist, um die Differentialdrehung des ersten und des zweiten Abtriebs zu verhindern, und eine gemeinsame Betriebssteuerung (26, 26') umfasst, **gekennzeichnet durch** eine Trenneinheit (20) zwischen dem ersten Abtrieb des Differentials (14) und dem ersten Rädersatz (24), die zum Unterbrechen der Antriebskraft zu dem ersten Rädersatz (24) funktionell ist, wobei die gemeinsame Betriebssteuerung (26, 26') zum Betätigen eines ersten Stellantriebs der Trenneinheit (20), eines zweiten Stellantriebs der Bremse (28) und eines dritten Stellantriebs des Differentials (14) funktionell ist und das Kraftübertragungssystem bei Betätigung der Bremse (28) des ersten Rädersatzes (24) funktionell ist zum Unterbrechen der Antriebskraft zum ersten Rädersatz (24), während das Differential (14) gesperrt wird, um die Antriebskraft zum zweiten Rädersatz (18) aufrecht zu erhalten.

2. Kraftübertragungssystem nach Anspruch 1, wobei die Trenneinheit (20) eine Reibscheiben-Antriebskupplung (86) beinhaltet, die einen Antrieb (40) und einen Abtrieb (52) hat.

3. Kraftübertragungssystem nach Anspruch 2, wobei die Reibscheiben-Antriebskupplung (86) mehrere Reibscheiben (88) beinhaltet.

4. Kraftübertragungssystem nach Anspruch 3, wobei die Reibscheiben-Antriebskupplung (86) einen Nockenmechanismus (82, 94) beinhaltet, der selektiv funktioniert, um eine Andrückkraft auf die Reibscheiben-Antiebskupplung (86) auszuüben, um sie Antriebskraft von ihrem Antrieb (40) zu ihrem Abtrieb (52) übertragen zu lassen, und um die Andrückkraft von der Reibscheiben-Antriebskupplung wegzunehmen, so dass sich ihr Antrieb und ihr Abtrieb unabhängig voneinander drehen können.

5. Kraftübertragungssystem nach Anspruch 4, wobei der Nockenmechanismus (82) von einer sekundären Reibscheibenkupplung (60) in der Trenneinheit betätigt wird.

6. Kraftübertragungssystem nach Anspruch 5, wobei der Nockenmechanismus (82, 94) bei Freigabe der sekundären Reibscheibenkupplung (60) betrieben wird, um die Andrückkraft von der Antriebskupplung (86) wegzunehmen.

7. Kraftübertragungssystem nach Anspruch 5 oder Anspruch 6, wobei der Drehmomentbetrag, der von der sekundären Kupplung (60) übertragen werden kann, verstellbar ist.

8. Kraftübertragungssystem nach einem der vorhergehenden Ansprüche, wobei die gemeinsame Betriebssteuerung (26, 26') zum Anlegen von Hydraulikdruck an ein hydraulisches Steuerungssystem zum Betreiben eines ersten hydraulischen Stellantriebs der Trenneinheit (20) und an einen zweiten hydraulischen Stellantrieb der Bremse (28) funktionell ist.

9. Kraftübertragungssystem nach einem der vorhergehenden Ansprüche, wobei der erste Rädersatz (24) die Hinterräder des Fahrzeugs beinhaltet.

10. Kraftübertragungssystem nach einem der vorhergehenden Ansprüche, wobei der zweite Rädersatz (18) die Vorderräder des Fahrzeugs beinhaltet,

11. Kraftübertragungssystem nach einem der vorhergehenden Ansprüche, umfassend ein Getriebe (12) mit einem Abtrieb, der mit einem mittleren Differential (14) verbunden ist, einem hinteren Differential (22), bei dem ein Antrieb durch die Trenneinheit (20) mit einem ersten Abtrieb des mittleren Differentials verbunden ist, und einem vorderen Differential (16), bei dem ein Antrieb mit einem zweiten Abtrieb des mittleren Differentials verbunden ist.

12. Kraftübertragungssystem nach Anspruch 11, wobei bei Betreiben der Trenneinheit (20) der zweite Abtrieb des mittleren Differentials (14) auf die Drehung zusammen mit dem ersten Abtrieb beschränkt ist.

13. Kraftübertragungssystem nach Anspruch 12, wobei die Trenneinheit (20) und das mittlere Differential (14) durch Betreiben eines gemeinsamen Steuerungssystems (26, 26') gesperrt sind.

14. Kraftübertragungssystem nach Anspruch 13, wobei das gemeinsame Steuerungssystem (26, 26') zum Bremsen von Rädern funktioniert, die von dem hinteren Differential (22) angetrieben werden.

15. Fahrzeug, umfassend eine Antriebsmaschine (10), ein Mehrganggetriebe (12) und ein Kraftübertragungssystem nach einem der vorhergehenden Ansprüche.

## Revendications

1. Système de transmission pour un véhicule qui a un premier et un second jeu de roues entraînées (24,18) et un frein (28) qui est utilisable pour freiner le premier jeu de roues (24), le système de transmission comprenant un différentiel (14) ayant une entrée d'entraînement, une première sortie pour entraîner le premier jeu de roues (24) et une seconde sortie pour entraîner le second jeu de roues (18), le différentiel (14) étant opérationnel pour transmettre l'entraînement à partir de l'entrée d'entraînement aux jeux de roues entraînées et étant verrouillable pour empêcher la rotation différentielle des première et seconde sorties, et une commande de fonctionnement commune (26, 26'), **caractérisé par** une unité de déconnexion (20) entre la première sortie du différentiel (14) et le premier jeu de roues (24) qui est utilisable pour déconnecter l'entraînement vers le premier jeu de roues (24), où la commande de fonctionnement commune (26, 26') est utilisable pour utiliser un premier actionneur de l'unité de déconnexion (20), un second actionneur du frein (28), et un troisième actionneur du différentiel (14), et le système de transmission est opérationnel, sur application du frein (28) au premier jeu de roues (24), pour déconnecter l'entraînement vers le premier jeu de roues (24), tout en verrouillant le différentiel (14) pour maintenir entraînement vers le second jeu de roues (18).

2. Système de transmission selon la revendication 1, dans lequel l'unité de déconnexion (20) inclut un embrayage d'entraînement à plaques de friction (86) ayant une entrée d'entraînement (40) et une sortie d'entraînement (52).

3. Système de transmission selon la revendication 2, dans lequel l'embrayage d'entraînement à plaques de friction (86) inclut de multiples plaques de friction (88).

4. Système de transmission selon la revendication 3, dans lequel l'embrayage d'entraînement à plaques de friction (86) inclut un mécanisme de came (82, 94) qui opère de manière sélective pour appliquer une force de serrage à l'embrayage d'entraînement à plaques de friction (86) pour lui permettre de transmettre l'entraînement à partir de son entrée (40) à sa sortie (52), et pour supprimer la force de serrage de l'embrayage d'entraînement à plaques de friction pour permettre à son entrée et sa sortie de tourner de manière indépendante.

5. Système de transmission selon la revendication 4, dans lequel le mécanisme de came (82) est actionné par un embrayage à plaques de friction secondaire (60) à l'intérieur de l'unité de déconnexion.

6. Système de transmission selon la revendication 5, dans lequel, lors du relâchement de l'embrayage à plaques de friction secondaire (60), le mécanisme de came (82, 94) opère pour supprimer la force de serrage de l'embrayage d'entraînement (86).

7. Système de transmission selon la revendication 5 ou revendication 6, dans lequel la quantité de couple qui peut être transmise par l'embrayage secondaire (60) est réglable.

8. Système de transmission selon une quelconque revendication précédente, dans lequel la commande opérationnelle commune (26, 26') est opérationnelle pour appliquer une pression hydraulique à un système de commande hydraulique pour faire fonctionner un premier actionneur hydraulique de l'unité de déconnexion (20), et à un second actionneur hydraulique du frein (28).

9. Système de transmission selon une quelconque revendication précédente, dans lequel le premier jeu de roues (24) inclut les roues arrière d'un véhicule.

10. Système de transmission selon une quelconque revendication précédente, dans lequel le second jeu de roues (18) inclut les roues avant du véhicule.

11. Système de transmission selon une quelconque revendication précédente comprenant une boîte de vitesse (12) ayant une sortie connectée à un différentiel central (14) ; un différentiel arrière (22) ayant une entrée connectée à travers l'unité de déconnexion (20) à une première sortie du différentiel central ; et un différentiel avant (16) ayant une entrée connectée à une seconde sortie du différentiel central.

12. Système de transmission selon la revendication 11, dans lequel, sur fonctionnement de l'unité de déconnexion (20), la seconde sortie du différentiel central (14) est contrainte de tourner avec la première sortie.

13. Système de transmission selon la revendication 12, dans lequel l'unité de déconnexion (20) et le différentiel central (14) sont verrouillés par le fonctionnement d'un système de commande commun (26, 26').

14. Système de transmission selon la revendication 13, dans lequel le système de commande commun (26, 26') opère pour freiner les roues qui sont entraînées par le différentiel arrière (22).

15. Véhicule comprenant un moteur principal (10), une boîte de vitesse à plusieurs vitesses (12) et un système de transmission selon une quelconque revendication précédente.
